# EUROPÄISCHE PATENTSCHRIFT

(11) **EP 3 425 237 B1**
(45) Veröffentlichungstag und Bekanntmachung des Hinweises auf die Patenterteilung: **06.01.2021**
(21) Anmeldenummer: 18176178.4
(22) Anmeldetag: 06.06.2018
(51) Int. Cl.: F16H 1/06, F16H 3/12, B63H 20/20, F16H 57/021

(54) **SCHIFFSGETRIEBE**
MARINE TRANSMISSION
TRANSMISSION DE BATEAU

(30) Priorität: 06.07.2017 DE 102017211551
(43) Veröffentlichungstag der Anmeldung: 09.01.2019
(73) Patentinhaber: ZF Friedrichshafen AG, 88046 Friedrichshafen (DE)
(72) Erfinder: Hameister, Thies, 88048 Friedrichshafen (DE); Mayer-Jabs, Reinhold, 88250 Weingarten (DE)
(74) Vertreter: ZF Friedrichshafen AG

(56) Entgegenhaltungen:
- EP-A2- 1 522 491
- CN-A- 103 322 133
- CN-U- 203 127 134
- GB-A- 1 512 249
- JP-A- H0 577 788

## Beschreibung

Die Erfindung betrifft ein Schiffsgetriebe nach dem Oberbegriff des Anspruches 1.

Ein derartiges Schiffsgetriebe übersetzt eine Eingangsdrehzahl in eine Ausgangsdrehzahl und kann in vielen Fällen auch eine Drehrichtungsumkehr der mit der Abtriebswelle des Schiffsgetriebes verbundenen Propellerwelle ermöglichen. Ein solches Schiffsgetriebe kann für eine Antriebsanlage für ein Schiff oder ein Boot genutzt werden.

Bei Schiffen für kommerzielle Anwendungen, beispielsweise bei Fischereischiffen, sind Propellerdrehzahlen von 140 - 170 U/min üblich, wegen des guten mechanischhydraulischen Wirkungsgrades. Dabei werden gewöhnlich langsam laufende oder mittelschnell laufende Dieselmotoren zum Antrieb genutzt, die am Motorabtrieb eine Drehzahl von 100 bis 1000 Umdrehungen pro Minute zur Verfügung stellen. Erforderlichenfalls wird diese Drehzahl mittels eines Schiffsgetriebes mit Übersetzungen bis maximal 6:1 übersetzt, um die genannten Propellerdrehzahlen zu erreichen.

Ein solches Schiffsgetriebe mit einem Grundgetriebe und einer schaltbaren Nebenabtriebs-Einheit ist aus der DE 10 2012 218 912 A1 bekannt. Dieses Schiffsgetriebe weist eine Hauptantriebswelle auf, die mittels einer ersten lastschaltbaren Kupplung mit einer ersten Ritzelwelle verbindbar ist. Die Hauptantriebswelle, die erste lastschaltbare Kupplung und die erste Ritzelwelle sind dabei koaxial zueinander angeordnet und in einem Getriebegehäuse gelagert.

Aus der CN 103 322 133 A ist ein Schiffsgetriebe mit einer Hauptantriebswelle, mit einer ersten und einer zweiten Lamellenkupplung, mit einer ersten und einer zweiten Ritzelwelle und mit einer Abtriebswelle bekannt. Eine Antriebsleistung kann dabei von der Hauptantriebswelle über die erste Lamellenkupplung und die erste Ritzelwelle auf die Abtriebswelle übertragen werden. Die beiden Lamellenkupplungen, die beiden Ritzelwellen und die Abtriebswelle sind dabei teilweise in einem ersten Gehäuseteil des Schiffsgetriebes gelagert. Die Hauptantriebswelle ist parallel zu der ersten und zweiten Ritzelwelle angeordnet und in einem zweiten Gehäuseteil des Schiffsgetriebes gelagert. Im Betrieb wirken die erste und die zweite Lamellenkupplung sowie die erste und die zweite Ritzelwelle derart mit der Hauptantriebswelle und der Abtriebswelle zusammen, dass zur Auswahl der Drehrichtung der Abtriebswelle die Antriebsleistung wahlweise über die geschlossene erste Lamellenkupplung auf die erste Ritzelwelle oder über die geschlossene zweite Lamellenkupplung auf die zweite Ritzelwelle übertragen wird. Durch das gezielte Schließen jeweils einer der beiden Lamellenkupplungen wird also zwischen Vorwärts- und Rückwärtsantrieb ausgewählt. Ein Außenlamellenträger der ersten Lamellenkupplung weist eine erste Außenverzahnung auf, die mit einem Antriebsritzel auf der Hauptantriebswelle im Eingriff steht, während ein Innenlamellenträger der ersten Lamellenkupplung mit der ersten Ritzelwelle verdrehfest verbunden ist. Ein zweiter Außenlamellenträger der zweiten Lamellenkupplung weist eine zweite Außenverzahnung aufweist, die dauernd mit der ersten Außenverzahnung des ersten Außenlamellenträgers im Eingriff steht. Der Innenlamellenträger der zweiten Lamellenkupplung ist mit der zweiten Ritzelwelle verdrehfest verbunden.

Es ist die Aufgabe der vorliegenden Erfindung ein Schiffsgetriebe zu schaffen, das in einem breiten Anwendungsbereich flexibel einsetzbar und kostengünstig herstellbar ist.

Diese Aufgabe wird gelöst durch Schiffsgetriebe mit den Merkmalen des Anspruchs 1. Vorteilhafte Ausführungen sind in den abhängigen Ansprüchen angegeben.

Demnach wird ein Schiffsgetriebe mit einer mit einem Hauptantriebsmotor verbindbaren Hauptantriebswelle, mit zumindest einer ersten Lamellenkupplung und einer zweiten Lamellenkupplung, mit zumindest einer ersten Ritzelwelle und einer zweiten Ritzelwelle, und mit einer Abtriebswelle vorgeschlagen. Die Antriebsleistung des Hauptantriebsmotors ist dabei von der Hauptantriebswelle zumindest über die erste Lamellenkupplung und die erste Ritzelwelle auf die Abtriebswelle übertragbar. Die Antriebsleistung kann, abhängig von der Getriebeausführung und Schaltstellung auch noch über weitere Elemente des Antriebsstrangs in dem Schiffsgetriebes geleitet werden. Die erste Lamellenkupplung, die erste Ritzelwelle und die Abtriebswelle sind dabei in einem Hauptgehäuse des Schiffsgetriebes gelagert.

Die Hauptantriebswelle ist erfindungsgemäß parallel zu der ersten Ritzelwelle angeordnet und in einem Nebengehäuse des Schiffsgetriebes gelagert. Die Lagerung der Hauptantriebswelle kann in bekannter Weise mittels Wälzlagern realisiert werden, wobei sich die Wälzlager an geeigneten Lagerstellen des Nebengehäuses abstützen. Entsprechende Wälzlager und Lagerstellen sind in dem Hauptgehäuse für die zumindest eine Lamellenkupplung, die zumindest eine Ritzelwelle und die Abtriebswelle vorgesehen. Die Hauptantriebswelle kann zumindest größtenteils in dem Nebengehäuse angeordnet sein, sodass beispielsweise nur das antriebsseitige Ende der Hauptantriebswelle aus dem Nebengehäuse hinausragt, um dort unmittelbar oder über eine Gelenkwelle mit einer Motorwelle des Hauptantriebsmotors verbunden zu werden. Die Hauptantriebswelle kann dazu an ihrem antriebsseitigen Ende einen Antriebsflansch aufweisen, über den sie reibschlüssig oder formschlüssig mit der Gelenkwelle oder der Motorwelle des Hauptantriebsmotors verbindbar ist.

Die Anordnung und Lagerung der Hauptantriebswelle in dem Nebengehäuse parallel zu der ersten Ritzelwelle ermöglicht es, zwischen der Hauptantriebswelle und der ersten Ritzelwelle eine zusätzliche Übersetzungsstufe vorzusehen, beispielsweise in Form einer Stirnradstufe. Verglichen mit den herkömmlichen Schiffsgetrieben können dadurch verhältnismäßig große Übersetzungen von bis zu 15 : 1 realisiert werden. Durch solche größere Übersetzungen ist es möglich, die eingangs genannten optimalen Propellerdrehzahlen von 140 - 170 U/min auch mit schnelllaufenden Motoren zu realisieren. Die Verwendung von schnelllaufenden Motoren eröffnet bei der Entwicklung und beim Bau eines Schiffs und dessen Antriebsstrangs beispielsweise die Möglichkeit den Bauraum in einem Schiffsrumpf anders zu nutzen. Ferner kann auf eine größere Anzahl an möglichen Herstellern und Zulieferern auch von schnelllaufenden Schiffsmotoren zugegriffen werden.

Ein anderer vorteilhafter Aspekt der Erfindung ist, dass größere Übersetzungen möglich sind, unter Verwendung von bereits bestehenden und bewährten Standardkomponenten, beispielsweise des Hauptgehäuses und des Nebengehäuses. Aufwändige, teure und zeitraubende Neukonstruktionen können damit verhindert werden, ebenso wie eine große und teure Variantenvielfalt. Investitionen in Werkzeuge, Montage- und Prüfeinrichtungen sind nicht erforderlich, die Anzahl notwendiger Neuteile ist sehr gering.

Für das Hauptgehäuse wird ein Hauptgehäuse verwendet, wie es auch in herkömmlichen Schiffsgetrieben genutzt wird, bei denen die Hauptantriebswelle in dem Hauptgehäuse angeordnet und gelagert ist. Die Gehäuseöffnung in dem Hauptgehäuse, die beim herkömmlichen Schiffsgetriebe zur Durchführung der Hauptantriebswelle vorgesehen war, kann mit einem einfachen Deckel verschlossen werden. Als Nebengehäuse wird ein Nebengehäuse genutzt wie es bei herkömmlichen Schiffsgetrieben für einen Nebenabtrieb vorgesehen ist. Durch die zusätzliche Übersetzungsstufe wird die Hauptantriebswelle mit höheren Drehzahlen angetrieben, sodass sich die Drehmomente an der Hauptantriebswelle entsprechend verringern. Deshalb können die Lager- bzw. Abstützkräfte an den Lagerstellen und am Nebengehäuse auch von dem ursprünglich nur für einen Nebenabtrieb konstruierten Nebengehäuse aufgenommen werden.

Mithilfe der Erfindung kann der Hauptantriebsmotor ausgetauscht werden, ohne Änderung der Getriebe-Fundamentierung im Schiff vornehmen zu müssen. Dabei kann beispielsweise von einem mittelschnelllaufenden auf einen schnelllaufenden Dieselmotor oder umgekehrt gewechselt werden. Die Getriebe-Fundamentierung ist in der Regel nur mit dem Hauptgehäuse verbunden, dessen Verbindungsstellen zur Fundamentierung wegen der Weiterverwendung desselben Hauptgehäuses unverändert bleiben können.

Der Begriff Lamellenkupplung soll jede Art von reibschlüssiger Kupplung umfassen. Jede der beiden Lamellenkupplungen kann also als lastschaltbare Kupplung, insbesondere als Reibscheibenkupplung ausgeführt sein. Eine solche Lamellenkupplung kann insbesondere hydraulisch betätigbar sein. Denkbar sind jedoch auch andere Betätigungsarten, beispielsweise pneumatisch oder elektrisch.

Die Abtriebswelle kann unmittelbar oder über weitere Antriebsstrangelemente mit der Propellerwelle eines anzutreibenden Schiffes drehmomentübertragend verbunden werden.

Gemäß der Erfindung dient das Hauptgehäuse zum Aufnehmen und Lagern der ersten Lamellenkupplung, der ersten Ritzelwelle und der Abtriebswelle. Das Schiffsgetriebe wird mittels des Hauptgehäuses in einem Schiffrumpf befestigt, sodass zumindest der überwiegende Anteil an Kräften und Drehmomenten des Schiffsgetriebes über das Hauptgehäuse in dem Schiffsrumpf abgestützt werden können.

Ein Schiffsgetriebe mit lediglich einer ersten Lamellenkupplung und einer Ritzelwelle ist ausreichend und geeignet die Propellerwelle in einer Richtung anzutreiben. Um mit einem derartigen Schiffsantrieb die Fahrtrichtung des Schiffs von vorwärts auf rückwärts umzukehren, kann ein Verstellpropeller eingesetzt werden. Ein Verstellpropeller ermöglicht es, durch Verdrehen der Flügel in der Nabe, die Steigung der Flügel während der Fahrt zu ändern und umzukehren. Der Verstellpropeller ermöglicht damit eine Rückwärtsfahrt bei unveränderter Drehrichtung des Hauptantriebsmotors und der Propellerwelle, nämlich dadurch, dass eine negative Steigung an dem Verstellpropeller eingestellt wird.

Für Schiffsantriebe mit einem Festpropeller ist dagegen gemäß der Erfindung vorgesehen, dass das Schiffsgetriebe eine erste und eine zweite Lamellenkupplung sowie eine erste und eine zweite Ritzelwelle aufweist. Diese wirken derart mit der Hauptantriebswelle und der Abtriebswelle zusammen, dass die Antriebsleistung zur Auswahl der Drehrichtung der Abtriebswelle wahlweise über die geschlossene erste Lamellenkupplung auf die erste Ritzelwelle oder über die geschlossene zweite Lamellenkupplung auf die zweite Ritzelwelle übertragbar ist. Mit anderen Worten wird zum Umschalten von Vorwärtsfahrt auf Rückwärtsfahrt und umgekehrt jeweils eine der beiden Lamellenkupplungen geöffnet und die andere geschlossen. Sind beide Lamellenkupplungen geöffnet, so ist die triebliche Verbindung zwischen Hauptantriebswelle und Abtriebswelle unterbrochen. Dieser Zustand kann auch als Leerlauf- oder Neutralstellung bezeichnet werden.

Gemäß der Erfindung sind die erste Ritzelwelle und die zweite Ritzelwelle parallel zueinander angeordnet, dass auf der ersten Ritzelwelle ein erstes Abtriebsritzel und auf der zweiten Ritzelwelle ein zweites Abtriebsritzel jeweils verdrehfest angeordnet sind, und dass das erste Abtriebsritzel und das zweite Abtriebsritzel mit einem auf der Abtriebswelle verdrehfest angeordneten Abtriebszahnrad im Eingriff stehen. Die Formulierung, wonach zwei Elemente verdrehfest zueinander angeordnet sind, ist so zu verstehen, dass die beiden Elemente in Bezug auf eine Rotationsachse nicht gegeneinander verdreht werden können. Eine verdrehfeste Verbindung kann beispielsweise in Form eines Pressverbands ausgeführt werden. Auch andere reib- oder formschlüssige Wellen-Naben-Verbindungen können als verdrehfeste Verbindung eingesetzt werden. Der Begriff "verdrehfest" kann jedoch auch bedeuten, dass zwei verdrehfest zueinander angeordnete Elemente aus einem Stück gefertigt, also einstückig ausgeführt sind. Beispielsweise kann ein verdrehfest auf einer Welle angeordnetes Zahnrad oder Ritzel zusammen mit der genannten Welle aus einem Stück hergestellt sein.

Gemäß der Erfindung umfassen die erste und die zweite Lamellenkupplung jeweils einen Außenlamellenträger und einen Innenlamellenträger, die zum Schließen der Kupplung miteinander gekoppelt werden. Der Außenlamellenträger und der Innenlamellenträger jeder Lamellenkupplung können dabei koaxial zueinander angeordnet sein.

Der erste Außenlamellenträger der ersten Lamellenkupplung weist eine erste Außenverzahnung auf, die mit einem Antriebsritzel auf der Hauptantriebswelle im Eingriff steht, während ein erster Innenlamellenträger der ersten Lamellenkupplung mit der ersten Ritzelwelle verdrehfest verbunden ist. Die erste Außenverzahnung und das damit kämmende Antriebsritzel auf der Hauptantriebswelle bilden dabei die oben beschriebene zusätzliche Übersetzungsstufe, die es ermöglicht auch mit schnelllaufenden Motoren optimale Propellerdrehzahlen zu realisieren. Durch eine gezielte Auswahl der Parameter dieser Stirnradpaarung, kann abhängig von der optimalen Betriebsdrehzahl des jeweils vorgesehenen Hauptantriebsmotors eine geeignete Übersetzung berechnet und eingesetzt werden, um für jede Anwendung die optimale Propellerdrehzahl zu erhalten.

Ein zweiter Außenlamellenträger der zweiten Lamellenkupplung weist eine zweite Außenverzahnung auf, die dauernd mit der ersten Außenverzahnung des ersten Außenlamellenträgers im Eingriff steht. Ein zweiter Innenlamellenträger der zweiten Lamellenkupplung ist mit der zweiten Ritzelwelle verdrehfest verbunden.

Insofern bildet jeweils der Außenlamellenträger mit seiner Außenverzahnung ein separat rotierbares Bauteil, während der Innenlamellenträger dauernd mit der zugeordneten Ritzelwelle fest verbunden ist. Der Außenlamellenträger kann ferner verdrehfest mit einer Kupplungswelle verbunden sein, wobei die Kupplungswelle insbesondere der Abstützung und Lagerung des Außenlamellenträgers in dem Hauptgehäuse dient. Die Kupplungswelle kann beispielsweise mittels eines oder mehrerer Wälzlager in dem Hauptgehäuse gelagert sein.

Eine solche Kupplungswelle kann beispielsweise als Vollwelle ausgeführt sein, die verdrehfest mit dem Außenlamellenträger verbunden ist. Die koaxial zu der Kupplungswelle angeordnete Ritzelwelle kann dabei als Hohlwelle ausgeführt sein, sodass die Kupplungswelle durch die Ritzelwelle hindurch verläuft. Die Kupplungswelle ist dabei also in der als Hohlwelle ausgeführten Ritzelwelle rotierbar angeordnet. Solche Verbindungen und Anordnungen der Lamellenträger, Kupplungswellen und Ritzelwellen haben sich in herkömmlichen Schiffsgetrieben im Betrieb als dauerhaft und zuverlässig erwiesen und können daher auch in Verbindung mit der vorliegenden Erfindung vorteilhaft genutzt werden.

Die bereits oben beschriebene Verwendung von Standardteilen kann auch im Hinblick auf die Elemente der Lamellenkupplungen und Ritzelwellen vorteilhaft angewendet werden. Die mehrfache Verwendung von Standardteilen wird auch Gleichteilekonzept genannt. Entsprechend einem Gleichteilekonzept und/oder einer Gleichteileverwendung kann eine Mehrzahl von Komponenten aus gleichen Teilen aufgebaut sein. Unter gleichen Teilen oder Komponenten kann insbesondere verstanden werden, dass die Außenlamellenträger der Lamellenkupplungen eine in einem Toleranzbereich gleiche und/oder identische Geometrie aufweisen. Unter gleichen Teilen kann insbesondere verstanden werden, dass ein Außenlamellenträger und/oder ein Innenlamellenträger einer Lamellenkupplung funktional auch als Außenlamellenträger bzw. Innenlamellenträger für eine weitere Lamellenkupplung verwendet werden kann. Entsprechendes gilt auch für die beiden Ritzelwellen.

Ein weiterer Aspekt der Erfindung betrifft eine vorteilhafte Ausrichtung und Anordnung der Hauptantriebswelle und der Abtriebswelle des Schiffsgetriebes. Demgemäß kann vorgesehen sein, dass die Hauptantriebswelle und die Abtriebswelle parallel zueinander angeordnet sind, dass die Hauptantriebswelle zu einer Antriebsseite hin aus dem Nebengehäuse herausragt, und dass die Abtriebswelle zu einer der Antriebsseite entgegengesetzten Abtriebsseite hin aus dem Hauptgehäuse herausragt.

Der überwiegende Teil der Hauptantriebswelle ist demgemäß im Inneren des Nebengehäuses angeordnet, während ein Endbereich der Hauptantriebswelle auf der Antriebsseite aus dem Nebengehäuse hinaus ragt. An diesem Endbereich kann ein Antriebsflansch befestigt sein, zur Verbindung der Hauptantriebswelle mit der Motorwelle des Hauptantriebsmotors.

Der überwiegende Teil der Abtriebswelle und das verdrehfest auf der Abtriebswelle angeordnete Abtriebszahnrad sind in dem Hauptgehäuse angeordnet, während ein Endbereich der Abtriebswelle auf der Abtriebsseite aus dem Hauptgehäuse hinausragt. Eine solche Ausrichtung der Hauptantriebswelle und der Abtriebswelle ermöglicht eine vorteilhafte Anordnung des Schiffsgetriebes in einem Schiffsrumpf im Hinblick auf eine optimale Nutzung des vorhandenen Bauraums.

Gemäß einer weiteren bevorzugten Ausführung kann das Nebengehäuse an dem Hauptgehäuse angeordnet sein, dass sich das Nebengehäuse in axialer Richtung nicht über das Hauptgehäuse hinaus erstreckt. Das Nebengehäuse kann demnach die Abmessungen des Schiffsgetriebes in radialer Richtung vergrößern, nicht aber in axialer Richtung. Auch dieses Merkmal dient einem kompakten Aufbau und einer bauraumsparenden Anordnung des Schiffsgetriebes im Schiffsrumpf.

Gemäß der Erfindung weist das Schiffsgetriebe zumindest einen Nebenantrieb oder einen Nebenabtrieb auf. Als Nebenantrieb kann beispielsweise ein im Vergleich zum Hauptantriebsmotor kleinerer Verbrennungsmotor oder ein Elektromotor vorgesehen werden. Nebenabtriebe werden auch PTO (Power Take Off) genannt. Über einen solchen Nebenabtrieb können beispielsweise Pumpen oder Generatoren angetrieben werden, die für den Schiffsbetrieb benötigt werden. Nebenantriebe und Nebenabtriebe können zuschaltbar ausgeführt sein, sodass sie unabhängig vom Betrieb des Hauptantriebsmotors betrieben werden können. Auch motorabhängige Nebenabtriebe sind möglich. Ein motorabhängiger Nebenabtrieb ist dauernd mit der Hauptantriebswelle gekoppelt. Er wird daher immer angetrieben, solange der Hauptantriebsmotor läuft. Ein motorabhängiger Nebenantrieb für eine Pumpe wird auch Primärpumpenantrieb genannt.

Der oder die Nebenantriebe bzw. Nebenabtriebe können jeweils an verschiedenen Wellen des Schiffsgetriebes angekoppelt sein. Gemäß einer Ausführungsform kann der zumindest eine Nebenantrieb und/oder Nebenabtrieb mittels einer dritten Lamellenkupplung zuschaltbar sein. Somit handelt es sich bei einem solchen Nebenabtrieb um einen motorunabhängigen Nebenabtrieb.

Bevorzugt kann beispielsweise vorgesehen sein, dass ein motorabhängiger Nebenantrieb für eine Primärpumpe koaxial zu der ersten Lamellenkupplung und der ersten Ritzelwelle angeordnet ist, während ein motorunabhängiger Pumpenantrieb koaxial zu der zweiten Ritzelwelle angeordnet ist.

Eine oben beschriebene, als Vollwelle ausgeführte Kupplungswelle kann zur Ankopplung von einem oder mehreren Nebenabtrieben genutzt werden, beispielsweise zum Antreiben einer Primärpumpe. Eine als Vollwelle ausgebildete Kupplungswelle kann sich von der Antriebsseite des Schiffsgetriebes bis zur Abtriebsseite erstrecken, wobei dann am abtriebsseitigen Ende der Kupplungswelle ein Nebenabtrieb angekoppelt werden kann.

Andere bzw. weitere Nebenabtriebe können an der zweiten Ritzelwelle angeordnet und angekoppelt sein. Da die zweite Ritzelwelle nicht permanent mit der Hauptantriebswelle und damit mit dem Hauptantriebsmotor des Schiffes verbunden ist, handelt es sich bei einem an der zweiten Ritzelwelle angeordneten Nebenabtrieb um einen motorunabhängigen Nebenabtrieb. Dahingegen ist die zweite Ritzelwelle über deren Abtriebsritzel und das Abtriebszahnrad permanent mit der Abtriebswelle gekoppelt. Ein von der Abtriebswelle antreibbarer Nebenabtrieb wird auch Sekundärabtrieb genannt. Ein Sekundärabtrieb eignet sich beispielsweise zum Betreiben einer Schleppfahrtpumpe.

An der ersten oder der zweiten Ritzelwelle kann auch eine Wellenbremse angekoppelt werden, mit der die Abtriebswelle und damit die Propellerwelle festgehalten werden kann. Verschiedene Ausführungsformen und die Funktion einer Wellenbremse sind dem Fachmann bekannt.

Gemäß der vorliegenden Erfindung ist vorgesehen, dass der Nebenabtrieb oder Nebenantrieb koaxial oder parallel zu der Hauptantriebswelle in dem Nebengehäuse angeordnet ist. In diesem Fall kann also die Hauptantriebswelle und eine Nebenantriebswelle oder eine Nebenabtriebswelle in dem Nebengehäuse gelagert sein.

Die primärseitige Ankopplung eines Nebenabtriebs ist für solche Anwendungen vorteilhaft, die eine höhere Drehzahl eines schnell- oder mittelschnelllaufenden Schiffsmotors zum Antreiben des jeweiligen Aggregates benötigen. Erforderlichenfalls kann dazu die Drehzahl der Hauptantriebswelle durch eine Stirnradstufe auf eine parallel zu der Hauptantriebswelle angeordnete Nebenabtriebswelle erhöht werden. Beispielsweise benötigen viele Pumpenarten eine höhere Drehzahl, als die vom Schiffsmotor über die Hauptantriebswelle bereitgestellte Drehzahl. Wellengeneratoren, die auf Schiffen der Versorgung mit elektrischer Energie dienen, können vorteilhaft mit einer Drehzahl von 1500 oder 1800 Umdrehungen pro Minute angetrieben werden. Solche Drehzahlen können über eine Stirnradstufe mit entsprechendem Übersetzungsverhältnis ins Schnelle zwischen der Hauptantriebswelle und der Nebenabtriebswelle einfach realisiert werden. Eine derartige Anpassung der Übersetzung eines Nebenabtriebs kann im Rahmen eines sogenannten Baukastensystems oder einer Modulbauweise erfolgen, bei der eine begrenzte Auswahl an Komponenten zur Verfügung steht, die je nach Anwendungsbedingungen und Anforderungen ausgewählt und zu einem für den jeweiligen Anwendungsfall geeigneten Schiffsgetriebe mit Nebenabtrieb zusammengebaut werden können. Ein solches Baukastensystem kann durch die Verwendung von Standardkomponenten Produktionskosten und Lagerhaltungskosten für Schiffsgetriebe und deren Bauteile verringern, ohne die Funktionalität einzuschränken.

Im Folgenden wird die Erfindung mit weiteren vorteilhaften Merkmalen anhand von in den nachfolgenden Figuren abgebildeten Ausführungsbeispielen näher erläutert.

Dabei zeigt die
- Fig. 1: eine schematische Darstellung eines ersten Schiffsgetriebes;
- Fig. 2: eine schematische Darstellung eines ersten erfindungsgemäßen Schiffsgetriebes;
- Fig. 3: eine schematische Darstellung eines zweiten erfindungsgemäßen Schiffsgetriebes und
- Fig. 4: eine schematische Darstellung eines dritten erfindungsgemäßen Schiffsgetriebes.

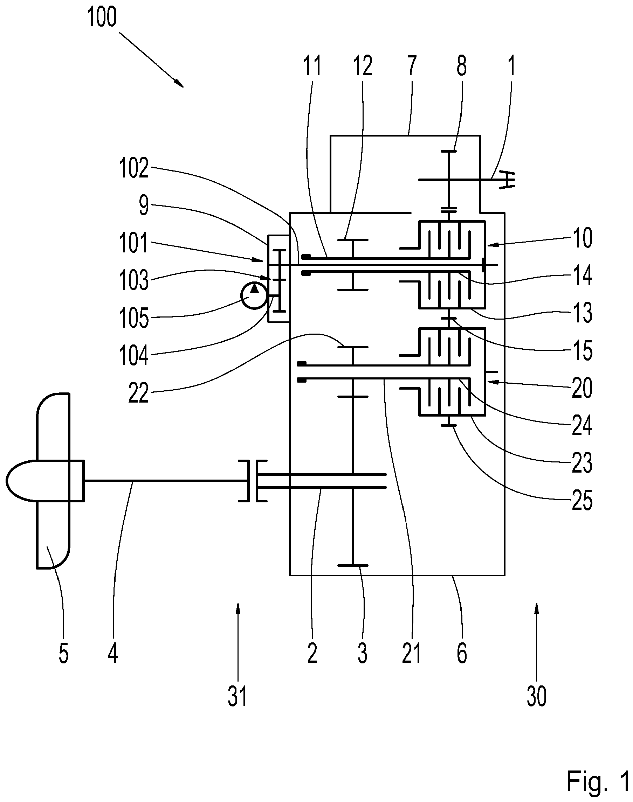

Die Fig. 1 zeigt den Aufbau eines Schiffsgetriebes 100 mit einer Hauptantriebswelle 1, die mit einem Hauptantriebsmotor verbindbar ist. Das Schiffsgetriebe 100 umfasst ferner eine Abtriebswelle 2, die mit einer Propellerwelle 4 verbunden ist. Auf dem freien Ende der Propellerwelle 4 ist ein Propeller 5 befestigt. Der Propeller 5 ist als Festpropeller ausgeführt. Das Schiffsgetriebe 100 weist ferner ein Hauptgehäuse 6 und ein Nebengehäuse 7 auf.

Das Schiffsgetriebe 100 weist eine erste Lamellenkupplung 10 und eine zweite Lamellenkupplung 20, sowie eine erste Ritzelwelle 11 und eine zweite Ritzelwelle 21 auf. Die beiden Lamellenkupplungen 10, 20 und die beiden Ritzelwellen 11, 21 sind in dem Hauptgehäuse 6 angeordnet und gelagert. Die erste Ritzelwelle 11 und die zweite Ritzelwelle 21 sind parallel zueinander angeordnet. Die erste Lamellenkupplung 10 ist koaxial zu der ersten Ritzelwelle 11 angeordnet und die zweite Lamellenkupplung 20 ist koaxial zu der zweiten Ritzelwelle 21 angeordnet. Beide Ritzelwellen 11, 21 sind in diesem Ausführungsbeispiel als Hohlwellen ausgeführt. Die Hauptantriebswelle 1 ist parallel zu der ersten Ritzelwelle 11 angeordnet und in dem Nebengehäuse 7 des Schiffsgetriebes 100 gelagert.

Die erste und die zweite Lamellenkupplung 10, 20 umfassen jeweils einen Außenlamellenträger 13, 23 und einen Innenlamellenträger 14, 24. Der Außenlamellenträger 13, 23 jeder Lamellenkupplung 10, 20 ist koaxial zu dem jeweiligen Innenlamellenträger 14, 24 angeordnet. Der Außenlamellenträger 13, 23 jeder Lamellenkupplung 10, 20 ist zumindest annähernd topfförmig ausgestaltet und umschließt den jeweiligen Innenlamellenträger 14, 24. Jeder Außenlamellenträger 13, 23 trägt auf seiner Innenseite eine Mehrzahl an Außenlamellen mit Reibflächen. Jeder Innenlamellenträger 14, 24 trägt eine Mehrzahl von Innenlamellen mit Reibflächen. Zum Schließen der jeweiligen Lamellenkupplung 10, 20 wird der zugehörige Außenlamellenträger 13, 23 mit dem zugehörigen Innenlamellenträger 14, 24 gekoppelt. Dazu werden die Außenlamellen und die Innenlamellen aufeinander gepresst, sodass durch Reibschluß ein Drehmoment übertragbar ist.

Der erste Innenlamellenträger 14 der ersten Lamellenkupplung 10 ist mit der ersten Ritzelwelle 11 verdrehfest verbunden und der zweite Innenlamellenträger 24 der zweiten Lamellenkupplung 20 ist mit der zweiten Ritzelwelle 21 verdrehfest verbunden.

Auf der ersten Ritzelwelle 11 ist ein erstes Abtriebsritzel 12 verdrehfest angeordnet und auf der zweiten Ritzelwelle 21 ist ein zweites Abtriebsritzel 22 verdrehfest angeordnet. Das erste Abtriebsritzel 12 und das zweite Abtriebsritzel 22 stehen im Eingriff mit einem auf der Abtriebswelle 2 verdrehfest angeordneten Abtriebszahnrad 3. In der schematischen Darstellung der Fig. 1 ist der Eingriff des ersten Abtriebsritzels 12 mit dem Abtriebszahnrad 3 nicht erkennbar, weil hier beide Ritzelwellen 11, 21 in die Zeichnungsebene geklappt wurden. In der praktischen Ausführung liegen die beiden Ritzelwellen 11, 21 jedoch in hintereinanderliegenden Vertikalebenen, sodass der gleichzeitige Eingriff der beiden Abtriebsritzel 12 und 22 mit dem Abtriebszahnrad 3 gegeben ist.

Die beiden Lamellenkupplungen 10, 20 wirken derart mit der Hauptantriebswelle 1 und der Abtriebswelle 2 zusammen, dass die Antriebsleistung zur Auswahl der Drehrichtung der Abtriebswelle 2 wahlweise über die geschlossene erste Lamellenkupplung 10 auf die erste Ritzelwelle 11 oder über die geschlossene zweite Lamellenkupplung 20 auf die zweite Ritzelwelle 21 übertragbar ist. Dies wird dadurch erreicht, dass der erste Außenlamellenträger 13 der ersten Lamellenkupplung 10 eine erste Außenverzahnung 15 aufweist, die mit einem Antriebsritzel 8 auf der Hauptantriebswelle 1 dauernd im Eingriff steht, und dass der zweite Außenlamellenträger 23 der zweiten Lamellenkupplung 20 eine zweite Außenverzahnung 25 aufweist, die dauernd mit der ersten Außenverzahnung 15 des ersten Außenlamellenträgers 13 im Eingriff steht. Derartige dauernd miteinander im Eingriff stehende Verzahnungen werden auch Konstantenverzahnungen genannt.

Die Hauptantriebswelle 1 und die Abtriebswelle 2 sind parallel zueinander angeordnet. Ein solcher gleichachsiger An- und Abtrieb ist vorteilhaft im Hinblick auf Platzbedarf, Schwerpunktlage oder Fundamentierungsmöglichkeiten des Schiffsgetriebes und des gesamten Antriebsstrangs im Schiffsrumpf.

Die Hauptantriebswelle 1 ragt zu einer Antriebsseite 30 hin aus dem Nebengehäuse 7 heraus, während die Abtriebswelle 2 zu einer der Antriebsseite 30 entgegengesetzten Abtriebsseite 31 aus dem Hauptgehäuse 6 herausragt.

Ferner ist in diesem Ausführungsbeispiel vorgesehen, dass das Nebengehäuse 7 bezogen auf die Rotationsachse der Hauptantriebswelle 1 so in radialer Richtung an dem Hauptgehäuse 6 angeordnet ist, dass sich das Nebengehäuse 7 in axialer Richtung nicht über das Hauptgehäuse 6 hinaus erstreckt. Die axiale Abmessung des gesamten Schiffsgetriebes 100 kann so verhältnismäßig gering gehalten werden, um den erforderlichen Bauraum in Axialrichtung gering zu halten. Die Richtungsangaben axial und radial sind in dieser Schrift bezogen auf die Ausrichtung der Hauptantriebswelle 1, sofern nicht ausdrücklich anders angegeben.

Das Schiffsgetriebe 100 gemäß der Fig. 1 weist einen ersten Nebenabtrieb 101 auf, der über eine erste Nebenabtriebswelle 102 und ein erstes Stirnradpaar 103 eine Pumpe 105 antreibt. Die Pumpe 105 ist auf der Abtriebsseite 31 des Schiffsgetriebes 100 angeordnet. Das erste Stirnradpaar 103 ist vorliegend in einem weiteren Nebengehäuse 9 angeordnet, welches auf der Abtriebsseite 31 an dem Hauptgehäuse 6 befestigt ist. Die erste Nebenabtriebswelle 102 ist verdrehfest mit dem Außenlamellenträger 13 der ersten Lamellenkupplung 10 verbunden und koaxial zu diesem und zur ersten Ritzelwelle 11 angeordnet. Die erste Nebenabtriebswelle 102 verläuft durch die als Hohlwelle ausgeführte erste Ritzelwelle 11 hindurch. Da die Pumpe 105 über eine erste Nebenabtriebsausgangswelle 104, das erste Stirnradpaar 103, die erste Nebenabtriebswelle 102 und den ersten Außenlamellenträger 13 dauernd mit der Hauptantriebswelle 1 gekoppelt ist, handelt es sich bei der Pumpe 105 um eine Primärpumpe.

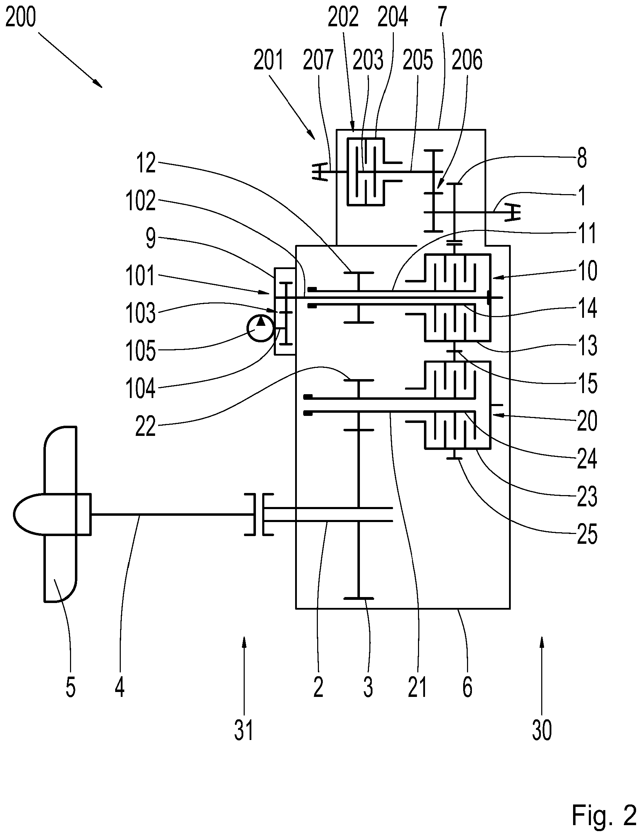

Die im Folgenden beschriebenen Schiffsgetriebe 200, 300, 400, die in Fig. 2, 3 und 4 dargestellt sind, weisen alle den gleichen Grundaufbau auf wie das oben beschriebene Schiffsgetriebe 100 gemäß der Fig. 1. Der gleiche Grundaufbau bedeutet, dass jedes der Schiffsgetriebe 100, 200, 300 und 400 eine Hauptantriebswelle 1, eine Abtriebswelle 2, eine erste Lamellenkupplung 10 und eine zweite Lamellenkupplung 20, sowie eine erste Ritzelwelle 11 und eine zweite Ritzelwelle 21 aufweisen, die jeweils in einem Hauptgehäuse 6 und einem Nebengehäuse 7 angeordnet und gelagert sind. Gleiche Elemente sind in den Fig. 2, 3 und 4 daher mit gleichen Bezugszeichen bezeichnet und hier nicht näher beschrieben, sofern sich auch ihre Anordnung in dem jeweiligen Schiffsgetriebe nicht von der Anordnung in dem Schiffsgetriebe 100 gemäß der Fig. 1 unterscheidet.

Die Verwendung eines Schiffsgetriebes mit gleichem Grundaufbau, jedoch anwendungsabhängig unterschiedlichen zusätzlichen Anbauteilen, entspricht dem oben beschriebenen Baukastensystem, bei dem mit einer begrenzte Auswahl an Bauteilen für einen breiten Anwendungsbereich jeweils das geeignete Schiffsgetriebe mit Nebenabtrieb zusammengebaut werden kann. Das heißt, dass nicht nur in ein und demselben Schiffsgetriebe mehrere Bauteile als Gleichteile ausgeführt sind, sondern dass darüber hinaus auch in verschiedenen Schiffsgetrieben ein hoher Anteil an Gleichteilen verwendet werden kann, solange die Schiffsgetriebe den gleichen Grundaufbau aufweisen. Ein solches Baukastensystem kann Produktionskosten und Lagerhaltungskosten für Schiffsgetriebe und deren Bauteile verringern.

Die Schiffsgetriebe 200, 300 und 400 unterscheiden sich von dem Schiffsgetriebe 100 in der Art und Anordnung der jeweiligen Nebenabtriebe bzw. einer Wellenbremse.

Das in Fig. 2 dargestellte Schiffsgetriebe 200 weist zusätzlich zu den Bauteilen des Schiffsgetriebes 100 einen zweiten Nebenabtrieb 201 auf. Der zweite Nebenabtrieb 201 ist über ein zweites Stirnradpaar 206 und eine zweite Nebenabtriebswelle 205 antreibbar. Der zweite Nebenabtrieb 201 ist parallel zu der Hauptantriebswelle 1 in dem Nebengehäuse 7 angeordnet. Das heißt, dass die zweite Nebenabtriebswelle 205 in dem Nebengehäuse 7 gelagert und parallel zu der Hauptantriebswelle 1 angeordnet ist. Der zweite Nebenabtrieb 201 ist als motorunabhängiger bzw. zuschaltbarer Nebenabtrieb ausgeführt. Deshalb umfasst er eine schaltbare Kupplung, nämlich die dritte Lamellenkupplung 202. Mit der dritten Lamellenkupplung 202 kann der zweite Nebenabtrieb 201 mit der Hauptantriebswelle 1 gekoppelt oder von ihr getrennt werden. Die dritte Lamellenkupplung 202 ist koaxial zu der zweiten Nebenabtriebswelle 205 angeordnet. Ein dritter Innenlamellenträger 203 der dritten Lamellenkupplung 202 ist verdrehfest mit der zweiten Nebenabtriebswelle 205 verbunden, während ein dritter Außenlamellenträger 204 verdrehfest mit einer zweiten Nebenabtriebsausgangswelle 207 verbunden ist. Die zweite Nebenabtriebsausgangswelle 207 ragt auf der Abtriebsseite 31 aus dem Nebengehäuse 7 heraus, um dort ein Nebenabtriebsaggregat, beispielsweise einen Wellengenerator anzutreiben. Durch eine gezielte Auswahl des Übersetzungsverhältnisses an dem zweiten Stirnradpaar 206 kann für das jeweilige Nebenabtriebsaggregat eine geeignete und vorteilhafte Drehzahl an dem zweiten Nebenabtrieb 201 eingestellt werden in Bezug auf eine Betriebsdrehzahl des Hauptantriebsmotors.

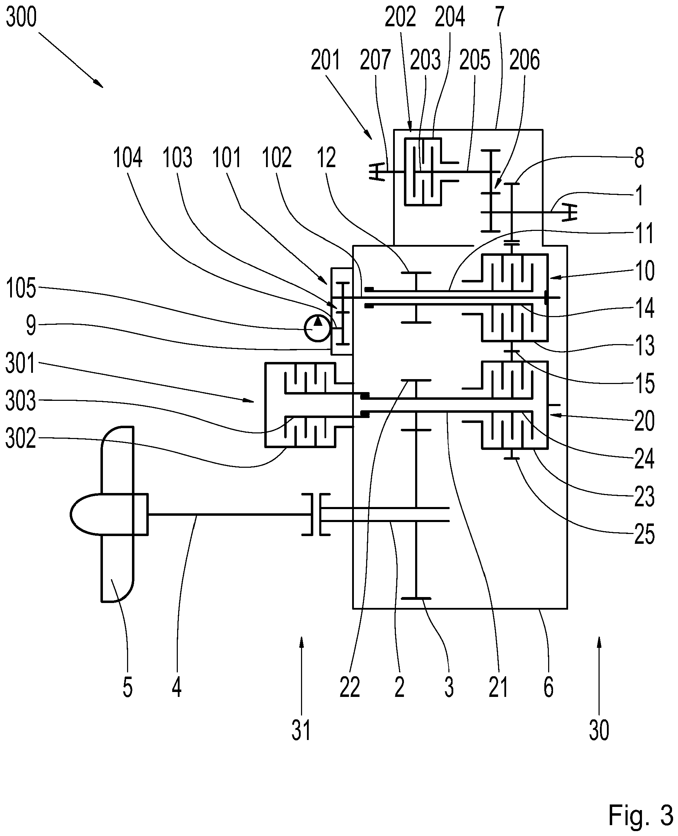

Das in Fig. 3 dargestellte Schiffsgetriebe 300 weist zusätzlich zu den Bauteilen des Schiffsgetriebes 200 eine Wellenbremse 301 auf. Die Wellenbremse 301 ist koaxial zu der zweiten Ritzelwelle 21 angeordnet. Die Wellenbremse 301 umfasst einen vierten Außenlamellenträger 302 und einen vierten Innenlamellenträger 303. Der vierte Innenlamellenträger 303 ist verdrehfest mit der zweiten Ritzelwelle 21 verbunden, während der vierte Außenlamellenträger 302 gehäusefest angeordnet ist, das heißt er ist an dem Hauptgehäuse 6 befestigt. Der vierte Außenlamellenträger 302 und der vierte Innenlamellenträger 303 weisen jeweils Bremslamellen mit Reibflächen auf, welche zum Bremsen der zweiten Ritzelwelle 21, der Abtriebswelle 2 und der Propellerwelle 4 aufeinander gepresst werden. Die Betätigung der Wellenbremse 301 kann beispielsweise hydraulisch erfolgen.

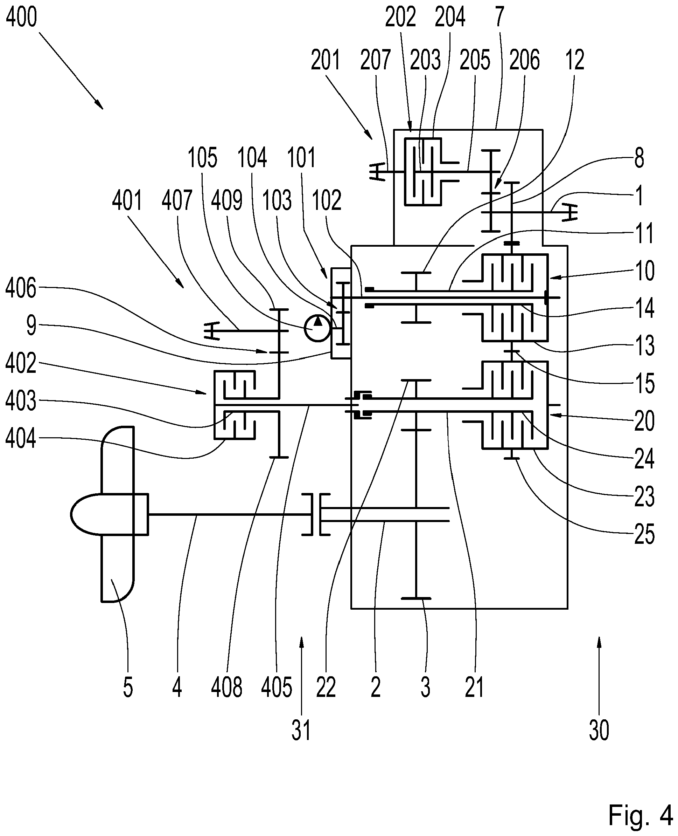

Das in Fig. 4 dargestellte Schiffsgetriebe 400 weist zusätzlich zu den Bauteilen des Schiffsgetriebes 200 einen dritten Nebenabtrieb 401 auf. Der dritte Nebenabtrieb 401 ist über eine mit der zweiten Ritzelwelle 21 verdrehfest verbundene dritte Nebenabtriebswelle 405 antreibbar. Der dritte Nebenabtrieb 401 ist als zuschaltbarer Nebenabtrieb ausgeführt. Deshalb umfasst er eine schaltbare Kupplung, nämlich die vierte Lamellenkupplung 402. Mit der vierten Lamellenkupplung 402 kann der dritte Nebenabtrieb 401 mit der zweiten Ritzelwelle 21 gekoppelt oder von ihr getrennt werden. Die vierte Lamellenkupplung 402 ist koaxial zu der zweiten Ritzelwelle 21 angeordnet. Ein vierter Außenlamellenträger 404 der vierten Lamellenkupplung 402 ist verdrehfest mit der dritten Nebenabtriebswelle 405 verbunden, während ein vierter Innenlamellenträger 403 verdrehfest mit einem treibenden Stirnrad 408 eines dritten Stirnradpaars 406 verbunden ist. Ein getriebenes Stirnrad 409 des dritten Stirnradpaars 406 ist im Eingriff mit dem treibenden Stirnrad 408. Das getriebene Stirnrad 409 ist verdrehfest auf der dritten Nebenabtriebsausgangswelle 407 befestigt.

Der dritte Nebenabtrieb 401 ist auf der Abtriebsseite 31 des Schiffsgetriebes 400 angeordnet. Zumindest die wesentlichen Bauteile des dritten Nebenabtriebs 401 können auch in noch einem weiteren Nebengehäuse angeordnet werden, sodass beispielsweise nur die dritte Nebenabtriebsausgangswelle 407 auf der Abtriebsseite 31 des Schiffsgetriebes 400 aus dem noch weiteren Nebengehäuse herausragt.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind. Insbesondere können die in den Figuren dargestellten Nebenabtriebe 32, 201, 401 und die Wellenbremse 301 im Sinne eines Baukastensystems in allen möglichen Konfigurationen an dem Schiffsgetriebe angeordnet werden. Das heißt, dass im Rahmen der vorliegenden Erfindung auch Schiffsgetriebe möglich sind, die nur einen Nebenabtrieb aufweisen, wobei der einzige Nebenabtrieb ausgeführt ist, wie er oben als zweiter oder dritter Nebenabtrieb beschrieben wurde. Ferner kann eine Wellenbremse in jeder dieser Konfigurationen an verschiedenen Wellen des Schiffsgetriebes angeordnet werden.

### Bezugszeichen

- 1: Hauptantriebswelle
- 2: Abtriebswelle
- 3: Abtriebszahnrad
- 4: Propellerwelle
- 5: Propeller
- 6: Hauptgehäuse
- 7: Nebengehäuse
- 8: Antriebsritzel
- 9: weiteres Nebengehäuse

- 10: erste Lamellenkupplung
- 11: erste Ritzelwelle
- 12: erstes Abtriebsritzel
- 13: erster Außenlamellenträger
- 14: erster Innenlamellenträger
- 15: erste Außenverzahnung

- 20: zweite Lamellenkupplung
- 21: zweite Ritzelwelle
- 22: zweites Abtriebsritzel
- 23: zweiter Außenlamellenträger
- 24: zweiter Innenlamellenträger
- 25: zweite Außenverzahnung

- 30: Antriebsseite
- 31: Abtriebsseite

- 100: Schiffsgetriebe
- 101: erster Nebenabtrieb
- 102: erste Nebenabtriebswelle
- 103: erstes Stirnradpaar
- 104: erste Nebenabtriebsausgangswelle
- 105: Pumpe

- 200: Schiffsgetriebe
- 201: zweiter Nebenabtrieb
- 202: dritte Lamellenkupplung
- 203: dritter Innenlamellenträger
- 204: dritter Außenlamellenträger
- 205: zweite Nebenabtriebswelle
- 206: zweites Stirnradpaar
- 207: zweite Nebenabtriebsausgangswelle

- 300: Schiffsgetriebe
- 301: Wellenbremse
- 302: vierter Außenlamellenträger
- 303: vierter Innenlamellenträger

- 400: Schiffsgetriebe
- 401: dritter Nebenabtrieb
- 402: vierte Lamellenkupplung
- 403: vierter Innenlamellenträger
- 404: vierter Außenlamellenträger
- 405: dritte Nebenabtriebswelle
- 406: drittes Stirnradpaar
- 407: dritte Nebenabtriebsausgangswelle
- 408: treibendes Stirnrad
- 409: getriebenes Stirnrad

## Patentansprüche

1. Schiffsgetriebe mit einer mit einem Hauptantriebsmotor verbindbaren Hauptantriebswelle (1), mit zumindest einer ersten Lamellenkupplung (10) und einer zweiten Lamellenkupplung (20), mit zumindest einer ersten Ritzelwelle (11) und einer zweiten Ritzelwelle (21), und mit einer Abtriebswelle (2), wobei eine Antriebsleistung von der Hauptantriebswelle (1) über die erste Lamellenkupplung (10) und die erste Ritzelwelle (11) auf die Abtriebswelle (2) übertragbar ist, wobei die erste Lamellenkupplung (10), die erste Ritzelwelle (11) und die Abtriebswelle (2) in einem Hauptgehäuse (6) des Schiffsgetriebes (100) gelagert sind, wobei die Hauptantriebswelle (1) parallel zu der ersten Ritzelwelle (11) angeordnet und in einem Nebengehäuse (7) des Schiffsgetriebes (100) gelagert ist, wobei die erste Lamellenkupplung (10) und die zweite Lamellenkupplung (20) sowie die erste Ritzelwelle (11) und die zweite Ritzelwelle (21) derart mit der Hauptantriebswelle (1) und der Abtriebswelle (2) zusammenwirken, dass zur Auswahl der Drehrichtung der Abtriebswelle (2) die Antriebsleistung wahlweise über die geschlossene erste Lamellenkupplung (10) auf die erste Ritzelwelle (11) oder über die geschlossene zweite Lamellenkupplung (20) auf die zweite Ritzelwelle (21) übertragbar ist, wobei ein erster Außenlamellenträger (13) der ersten Lamellenkupplung (10) eine erste Außenverzahnung (15) aufweist, die mit einem Antriebsritzel (8) auf der Hauptantriebswelle (1) im Eingriff steht, wobei ein erster Innenlamellenträger (14) der ersten Lamellenkupplung (10) mit der ersten Ritzelwelle (11) verdrehfest verbunden ist, wobei ein zweiter Außenlamellenträger (23) der zweiten Lamellenkupplung (20) eine zweite Außenverzahnung (25) aufweist, die dauernd mit der ersten Außenverzahnung (15) des ersten Außenlamellenträgers (13) im Eingriff steht, wobei ein zweiter Innenlamellenträger (24) der zweiten Lamellenkupplung (20) mit der zweiten Ritzelwelle (21) verdrehfest verbunden ist, wobei die erste Ritzelwelle (11) und die zweite Ritzelwelle (21) parallel zueinander angeordnet sind, wobei auf der ersten Ritzelwelle (11) ein erstes Abtriebsritzel (12) und auf der zweiten Ritzelwelle (21) ein zweites Abtriebsritzel (22) jeweils verdrehfest angeordnet sind, und wobei das erste Abtriebsritzel (12) und das zweite Abtriebsritzel (22) mit einem auf der Abtriebswelle (2) verdrehfest angeordneten Abtriebszahnrad (3) im Eingriff stehen, **dadurch gekennzeichnet, dass** zumindest ein Nebenantrieb oder Nebenabtrieb (201) koaxial oder parallel zu der Hauptantriebswelle (1) in dem Nebengehäuse (7) angeordnet ist.

2. Schiffsgetriebe nach Anspruch 1, **dadurch gekennzeichnet, dass** die Hauptantriebswelle (1) und die Abtriebswelle (2) parallel zueinander angeordnet sind, dass die Hauptantriebswelle (1) zu einer Antriebsseite (30) hin aus dem Nebengehäuse (7) herausragt, und dass die Abtriebswelle (2) zu einer der Antriebsseite (30) entgegengesetzten Abtriebsseite (31) aus dem Hauptgehäuse (6) herausragt.

3. Schiffsgetriebe nach einem der vorgenannten Ansprüche, **dadurch gekennzeichnet, dass** das Nebengehäuse (7) bezogen auf eine Rotationsachse der Hauptantriebswelle (1) so in radialer Richtung an dem Hauptgehäuse (6) angeordnet ist, dass sich das Nebengehäuse (7) in axialer Richtung nicht über das Hauptgehäuse (6) hinaus erstreckt.

4. Schiffsgetriebe nach einem der vorgenannten Ansprüche, **dadurch gekennzeichnet, dass** der zumindest eine Nebenantrieb und/oder Nebenabtrieb (101, 201, 401) mittels einer dritten Lamellenkupplung (202, 402) zuschaltbar ist.

## Claims

1. Marine transmission having a main drive shaft (1) which is connectable to a main drive engine, having at least one first multiplate clutch (10) and one second multiplate clutch (20), having at least one first pinion shaft (11) and one second pinion shaft (21), and having an output shaft (2), wherein a drive power can be transmitted from the main drive shaft (1) via the first multiplate clutch (10) and the first pinion shaft (11) to the output shaft (2), wherein the first multiplate clutch (10), the first pinion shaft (11) and the output shaft (2) are mounted in a main housing (6) of the marine transmission (100), wherein the main drive shaft (1) is arranged parallel to the first pinion shaft (11) and is mounted in a secondary housing (7) of the marine transmission (100), wherein the first multiplate clutch (10) and the second multiplate clutch (20) and also the first pinion shaft (11) and the second pinion shaft (21) interact with the main drive shaft (1) and the output shaft (2) such that, for the selection of the direction of rotation of the output shaft (2), the drive power can be transmitted selectively via the closed first multiplate clutch (10) to the first pinion shaft (11) or via the closed second multiplate clutch (20) to the second pinion shaft (21), wherein a first outer plate carrier (13) of the first multiplate clutch (10) has a first external toothing (15) which meshes with a drive pinion (8) on the main drive shaft (1), wherein a first inner plate carrier (14) of the first multiplate clutch (10) is connected rotationally conjointly to the first pinion shaft (11), wherein a second outer plate carrier (23) of the second multiplate clutch (20) has a second external toothing (25) which permanently meshes with the first external toothing (15) of the first outer plate carrier (13), wherein a second inner plate carrier (24) of the second multiplate clutch (20) is connected rotationally conjointly to the second pinion shaft (21), wherein the first pinion shaft (11) and the second pinion shaft (21) are arranged parallel with respect to one another, wherein a first output pinion (12) is arranged rotationally conjointly on the first pinion shaft (11) and a second output pinion (22) is arranged rotationally conjointly on the second pinion shaft (21), and wherein the first output pinion (12) and the second output pinion (22) mesh with an output toothed gear (3) arranged rotationally conjointly on the output shaft (2), **characterized in that** at least one secondary drive or secondary output (201) is arranged coaxially or parallel with respect to the main drive shaft (1) in the secondary housing (7).

2. Marine transmission according to Claim 1, **characterized in that** the main drive shaft (1) and the output shaft (2) are arranged parallel with respect to one another, **in that** the main drive shaft (1) projects out of the secondary housing (7) towards a drive side (30), and **in that** the output shaft (2) projects out of the main housing (6) towards an output side (31) situated opposite the drive side (30).

3. Marine transmission according to either of the preceding claims, **characterized in that** the secondary housing (7) is, in relation to an axis of rotation of the main drive shaft (1), arranged in a radial direction on the main housing (6) such that the secondary housing (7) does not extend beyond the main housing (6) in an axial direction.

4. Marine transmission according to any of the preceding claims, **characterized in that** the at least one secondary drive and/or secondary output (101, 201, 401) is engageable by means of a third multiplate clutch (202, 402) .

## Revendications

1. Transmission de bateau, comprenant un arbre menant principal (1) pouvant être relié à un moteur d'entraînement principal, au moins un premier embrayage à disques multiples (10) et un deuxième embrayage à disques multiples (20), au moins un premier arbre de pignon (11) et un deuxième arbre de pignon (21), et comprenant un arbre mené (2), dans laquelle une puissance d'entraînement peut être transmise de l'arbre menant principal (1) à l'arbre mené (2) par l'intermédiaire du premier embrayage à disques multiples (10) et du premier arbre de pignon (11), le premier embrayage à disques multiples (10), le premier arbre de pignon (11) et l'arbre mené (2) étant logés dans un carter principal (6) de la transmission de bateau (100), dans laquelle l'arbre menant principal (1) est disposé en parallèle au premier arbre de pignon (11) et est logé dans un carter auxiliaire (7) de la transmission de bateau (100), dans laquelle le premier embrayage à disques multiples (10) et le deuxième embrayage à disques multiples (20) ainsi que le premier arbre de pignon (11) et le deuxième arbre de pignon (21) coopèrent avec l'arbre menant principal (1) et l'arbre mené (2) de telle sorte que pour sélectionner le sens de rotation de l'arbre mené (2), la puissance d'entraînement peut être transmise au choix au premier arbre de pignon (11) par l'intermédiaire du premier embrayage à disques multiples (10) fermé ou au deuxième arbre de pignon (21) par l'intermédiaire du deuxième embrayage à disques multiples (20) fermé, dans laquelle un premier support de lamelles extérieur (13) du premier embrayage à disques multiples (10) présente une première denture extérieure (15) qui est en prise avec un pignon menant (8) sur l'arbre menant principal (1), un premier support de lamelles intérieur (14) du premier embrayage à disques multiples (10) étant relié de manière verrouillée en rotation au premier arbre de pignon (11), dans laquelle un deuxième support de lamelles extérieur (23) du deuxième embrayage à disques multiples (20) présente une deuxième denture extérieure (25) qui est en prise permanente avec la première denture extérieure (15) du premier support de lamelles extérieur (13), un deuxième support de lamelles intérieur (24) du deuxième embrayage à disques multiples (20) étant relié de manière verrouillée en rotation au deuxième arbre de pignon (21), le premier arbre de pignon (11) et le deuxième arbre de pignon (21) étant disposés en parallèle l'un à l'autre, dans laquelle respectivement un premier pignon mené (12) est disposé sur le premier arbre de pignon (11) et un deuxième pignon mené (22) est disposé sur le deuxième arbre de pignon (21) de manière verrouillée en rotation, et le premier pignon mené (12) et le deuxième pignon mené (22) étant en prise avec un engrenage mené (3) disposé de manière verrouillée en rotation sur l'arbre mené (2), **caractérisée en ce qu'**au moins un entraînement auxiliaire ou une sortie secondaire (201) est disposé(e) de manière coaxiale ou parallèle à l'arbre menant principal (1) dans le carter auxiliaire (7) .

2. Transmission de bateau selon la revendication 1, **caractérisée en ce que** l'arbre menant principal (1) et l'arbre mené (2) sont disposés en parallèle l'un à l'autre, **en ce que** l'arbre menant principal (1) fait saillie du carter auxiliaire (7) vers un côté entraînement (30), et **en ce que** l'arbre mené (2) fait saillie du carter principal (6) vers un côté sortie (31) opposé au côté entraînement (30).

3. Transmission de bateau selon l'une quelconque des revendications précédentes, **caractérisée en ce que** le carter auxiliaire (7), par rapport à un axe de rotation de l'arbre menant principal (1), est disposé dans la direction radiale sur le carter principal (6) de telle sorte que le carter auxiliaire (7) ne fait pas saillie du carter principal (6) dans la direction axiale.

4. Transmission de bateau selon l'une quelconque des revendications précédentes, **caractérisée en ce que** ledit au moins un entraînement auxiliaire et/ou ladite au moins une sortie secondaire (101, 201, 401) peuvent être mis en circuit au moyen d'un troisième embrayage à disques multiples (202, 402).
